# EUROPEAN PATENT APPLICATION

(11) **EP 1 983 518 A1**
(43) Date of publication of application: **22.10.2008**
(21) Application number: 07707977.0
(22) Date of filing: 02.02.2007
(51) Int. Cl.: G11B 19/04, H04N 5/76, H04N 5/765, H04N 5/781

(54) **INFORMATION PROCESSING APPARATUS, IMAGE PICK-UP DEVICE, INFORMATION PROCESSING METHOD AND COMPUTER PROGRAM**

(30) Priority: 06.02.2006 JP 2006027946
(71) Applicant: Sony Corporation, Minato-ku Tokyo (JP)
(72) Inventor: SHIMONO, Hiroshi, Tokyo 1080075 (JP); ITO, Ryogo, Tokyo 1080075 (JP); YOKOTA, Junichi, Tokyo 1080075 (JP)
(74) Representative: Körber, Martin Hans
(86) International application number: PCT/JP2007/051828
(87) International publication number: WO 2007/091497

(57) **Abstract**

A structure is provided that prevents damage to an HDD and loss of recorded data by prohibiting the hard disk from being shifted to the active state in a state in which there is a problem with an environment. On the basis of detection information of each of sensors such as a fall sensor and a temperature sensor, it is determined whether or not data recording or a playback process utilizing the hard disk can be executed safely. The hard disk is caused to be shifted from being in a suspended state to being in an active state on condition that it is determined that safe data recording or playback is possible, and a data recording and playback process utilizing the hard disk is executed. By using this structure, the hard disk is prevented from being shifted to being in the active state in a state in which there is a problem with the environment, for example, in the case of falling, the case of high temperature or high humidity, or the like, and damage to the HDD and loss of recorded data can be prevented.

## Description

### Technical Field

The present invention relates to an information processing apparatus, an image pick-up apparatus, and an information processing method, and a computer program. More specifically, the present invention relates to an information processing apparatus, an image pick-up apparatus, and an information processing method, and a computer program which have a structure in which data to be recorded is temporarily held in a buffer and data recording from the buffer to the hard disk is intermittently executed in an apparatus utilizing a hard disk as a recording medium.

### Background Art

For example, in video cameras and other information processing appliances, a hard disk is often utilized as a data recording medium. Hard disks have a large recording capacity, accessing a hard disk is easy, and hard disk drives (HDD) are mounted on various appliances.

For recording data on a hard disk in a HDD-mounted apparatus, an intermittent recording scheme is often applied in order to reduce power consumption. For example, in a case in which shooting data is recorded in a video camera, data is not directly recorded on an HDD and is temporarily accumulated in a buffer memory, and if an accumulated amount in the buffer has reached a predetermined amount, the intermittent recording scheme is processing in which data is collectively recorded from the buffer to the HDD.

The HDD is caused to be in a suspended state during a period of accumulating data in the buffer memory, and the HDD is caused to be in an active state only during a period when the data accumulated in the buffer is output to and recorded on the HDD. By executing this intermittent recording scheme, a drive time for the HDD, that is, an active-state setting time can be reduced, and it becomes possible to decrease power consumption.

In a case in which the HDD is in the suspended state, for example, the rotation of a disk of the HDD is stopped, and the head is fixed to a retraction position. Thus, in general, in the case in which the HDD is in the suspended state, the risk of the HDD being damaged is low even if an impact in some degree is applied. However, in the active state, for example, if falling of the HDD or the like occurs, the probability is increased that damage to the head or to the disk may occur. In general, when the HDD is in the active state, it can be said that the HDD is in a state sensitive to an external environment, for example, changes in the external environment such as impact, vibration, temperature, air pressure, and humidity.

Depending on an environment, data recording may be impossible. Even if an impact does not cause damage to the HDD in a case in which the HDD is in the suspended state, the impact may damage the HDD in the active state. In this way, when the HDD is in the active state which is sensitive and when there is, for example, a severe change in an external environment such as an impact, a shot video cannot be recorded, and also there is a possibility of destroying a video which has been recorded so far.

### Disclosure of Invention

### Technical Problem

The present invention is made in light of the above-described problems. An object of the present invention is to provide an information processing apparatus, an image pick-up apparatus, and an information processing method, and a computer program that are capable of preventing the occurrence of damage to an HDD, or loss of recorded content by applying processing which maintains a suspended state in a case in which in an apparatus utilizing an HDD as a recording medium and performing intermittent recording, when the HDD returns from being in the suspended state to being in the active state, it is determined, on the basis of a surrounding environment, whether or not the HDD should be shifted to being in the active state and it has been determined that the HDD should not be shifted to being in the active state.

### Technical Solution

A first aspect of the present invention is
an information processing apparatus which executes data recording or a playback process, characterized by including
a hard disk as a data recording medium,
a control unit for executing intermittent data recording or data playback control utilizing the hard disk, and
a sensor for detecting ambient information of the information processing apparatus, and
the control unit is configured to
determine, on the basis of input information from the sensor, whether or not the data recording or the playback process utilizing the hard disk is possible, and to execute a process of causing the hard disk to be shifted from being in a suspended state to being in an active state in which the data recording or the playback process is executable on condition that it has been determined that the data recording or the playback is possible.

Moreover, in an embodiment of the information processing apparatus of the present invention, the control unit is characterized by being configured to accumulate data to be recorded on the hard disk in a buffer, and to execute control of recording, on the hard disk, the data accumulated in the buffer in a case in which the amount of data accumulated in the buffer is more than or equal to a predetermined threshold, setting the hard disk to be in the suspended state during a period in which only a buffer accumulation process is executed, and determining whether or not the data recording utilizing the hard disk is possible in a case in which the data accumulated in the buffer is recorded on the hard disk, and executing a process of causing the hard disk to be shifted from being in the suspended state to being in the active state on condition that it has been determined that the data recording is possible.

Moreover, in an embodiment of the information processing apparatus of the present invention, the control unit is characterized by executing a process of prohibiting a process of shifting the hard disk from being in the suspended state to being in the active state in a case in which, on the basis of detection information of the sensor, it has been determined that the data recording or the playback process utilizing the hard disk cannot be executed.

Moreover, in an embodiment of the information processing apparatus of the present invention, the control unit is characterized by, in a case in which, on the basis of detection information of the sensor, it has been determined that the data recording utilizing the hard disk cannot be executed, executing a process of detecting a device capable of recording data other than the hard disk, and executing recording data in the detected device.

Moreover, in an embodiment of the information processing apparatus of the present invention, the control unit is characterized by being configured to repeatedly execute a determination process based on detection information of the sensor in a case in which, on the basis of detection information of the sensor, it has been determined that the data recording utilizing the hard disk cannot be executed.

Moreover, in an embodiment of the information processing apparatus of the present invention, the control unit is characterized by executing a process of prohibiting the hard disk from being shifted from being in the suspended state to being in the active state in a case in which, on the basis of detection information of at least one of these sensors, a fall sensor, a vibration sensor, a temperature sensor, a humidity sensor, an air pressure sensor, and an outgassing sensor, it has been determined that the data recording or the playback process utilizing the hard disk cannot be executed.

Moreover, a second aspect of the present invention is an image pick-up apparatus, characterized by including
an image pick-up unit,
a buffer for temporarily memorizing data input via the image pick-up unit,
a hard disk for intermittently and collectively recording data accumulated in the buffer,
a control unit for executing control of intermittent data recording utilizing the hard disk, and
a sensor for detecting ambient information of the image pick-up apparatus, and
the control unit is configured to
determine, on the basis of input information from the sensor, whether or not the data recording utilizing the hard disk is executable, and cause the hard disk to be shifted from being in a suspended state to being in an active state, in which the data recording is executable, on condition that it has been determined that the data recording is executable, and execute a process of recording, on the hard disk, the data accumulated in the buffer.

Moreover, a third aspect of the present invention is
an information processing method for executing data recording or a playback process in an information processing apparatus, characterized by including
an environment determination step of determining whether or not data recording or a playback process utilizing a hard disk is executable on the basis of input information from a sensor for detecting ambient information of the information processing apparatus,
a state changing step of executing a process of causing the hard disk to be shifted from being in a suspended state to being in an active state, in which the data recording or the playback process is executable, on condition that, in the environment determination step, it has been determined that the data recording or the playback is possible, and
a data recording and playback step of executing the data recording or the playback process utilizing the hard disk which has been shifted to being in the active state in the state changing step.

Moreover, in an embodiment of the information processing method of the present invention, the information processing method is characterized by further including a buffer accumulation step of accumulating, in the buffer, data to be recorded on the hard disk, and an amount-of-data-accumulated-in-buffer determination step of determining whether or not the amount of data accumulated in the buffer is more than or equal to a predetermined threshold, and in that an environment determination process in the environment determination step is executed in a case in which the amount of data accumulated in the buffer in the amount-of-data-accumulated-in-buffer determination step is more than or equal to the predetermined threshold.

Moreover, in an embodiment of the information processing method of the present invention, the information processing method is characterized by further including a step of executing a process of prohibiting a process of shifting the hard disk from being in the suspended state to being in the active state in a case in which, on the basis of detection information of the sensor, it has been determined that the data recording or the playback process utilizing the hard disk cannot be executed.

Moreover, in an embodiment of the information processing method of the present invention, the information processing method is characterized by further including, in a case in which, on the basis of detection information of the sensor, it has been determined that the data recording utilizing the hard disk cannot be executed, a step of executing a process of detecting a device capable of recording data other than the hard disk, and executing recording data in the detected device.

Moreover, in an embodiment of the information processing method of the present invention, the information processing method is characterized by further including a step of repeatedly executing a determination process based on detection information of the sensor in a case in which, on the basis of detection information of the sensor, it has been determined that the data recording utilizing the hard disk cannot be executed.

Moreover, in an embodiment of the information processing method of the present invention, the environment determination step is characterized by being a step of determining, on the basis of detection information of at least one of these sensors, a fall sensor, a vibration sensor, a temperature sensor, a humidity sensor, an air pressure sensor, and an outgassing sensor, whether or not the data recording or the playback process utilizing the hard disk can be executed.

Moreover, a fourth aspect of the present invention is
a computer program causing data recording or a playback process to be executed in an information processing apparatus, characterized by causing execution of,
in a control unit, an environment determination step of causing determination of whether or not data recording or a playback process utilizing a hard disk is executable on the basis of input information from a sensor for detecting ambient information of the information processing apparatus,
in the control unit, a state changing step of causing a process of causing the hard disk to be shifted from being in a suspended state to being in an active state, in which the data recording or the playback process is executable to be executed on condition that it has been determined that the data recording or the playback is possible, and
in the control unit, a data recording and playback step of causing execution of the data recording or the playback process utilizing the hard disk which has been shifted to being in the active state.

Here, a computer program of the present invention is a computer program which can be provided by a storage medium or a communication medium which can provide various program codes in a computer readable format to a general-purpose computer system capable of executing various program codes, for example, a storage medium such as a CD, an FD, and an MO, or a communication medium such as a network. By providing such a program in a computer readable format, processing corresponding to the program can be achieved on the computer system.

Additional other objects, characteristics, and advantages of the present invention will become clear from more detailed descriptions based on embodiments of the present invention described below and the attached drawings. Here, the system in the specification is a logical assembly configuration of a plurality of apparatuses. It is not limited to that each of the apparatuses in the configuration is disposed in the same housing.

### Advantageous Effects

According to a structure of one embodiment of the present invention, the structure is designed so that it is determined, on the basis of detection information of at least one of these sensors, for example, a fall sensor, a vibration sensor, a temperature sensor, a humidity sensor, an air pressure sensor, and an outgassing sensor, whether or not data recording or a playback process utilizing the hard disk can be safely executed, and the hard disk is caused to be shifted from being in the suspended state to being in the active state, in which data recording or a playback process is executable, on condition that it has been determined that the safe data recording or playback is possible. Thus, the hard disk is prohibited from being shifted to the active state in a state in which there is a problem with an environment, for example, in the case of falling, the case of high temperature or high humidity, or the like, and damage to the HDD and loss of recorded data can be prevented.

### Brief Description of Drawings

[Fig. 1] Fig. 1 is a diagram of showing a structure of an image pick-up apparatus as one embodiment of an information processing apparatus of the present invention.
[Fig. 2] Fig. 2 is a diagram for describing intermittent recording processing executed in the image pick-up apparatus.
[Fig. 3] Fig. 3 is a diagram showing a flowchart for describing a data recording processing sequence executed in the image pick-up apparatus.
[Fig. 4] Fig. 4 is a diagram showing a flowchart for describing a data recording processing sequence executed in the image pick-up apparatus as one embodiment of the information processing apparatus of the present invention.
[Fig. 5] Fig. 5 is a diagram showing a flowchart for describing an HDD start-up permitted or start-up unpermitted state setting sequence executed in the data recording processing.
[Fig. 6] Fig. 6 is a diagram showing a flowchart for describing a processing sequence in the case of in the HDD start-up unpermitted state.

### Best Modes for Carrying Out the Invention

In the following, with reference to the drawings, an information processing apparatus, an image pick-up apparatus, and information processing method, and a computer program of the present invention will be described in detail. The present invention is applicable to various apparatuses on which a hard disk is mounted as a data recording medium. In the following, as one embodiment of an information processing apparatus according to the present invention, a structure of and processing performed by an image pick-up apparatus which utilizes a hard disk as a data recording medium will be described.

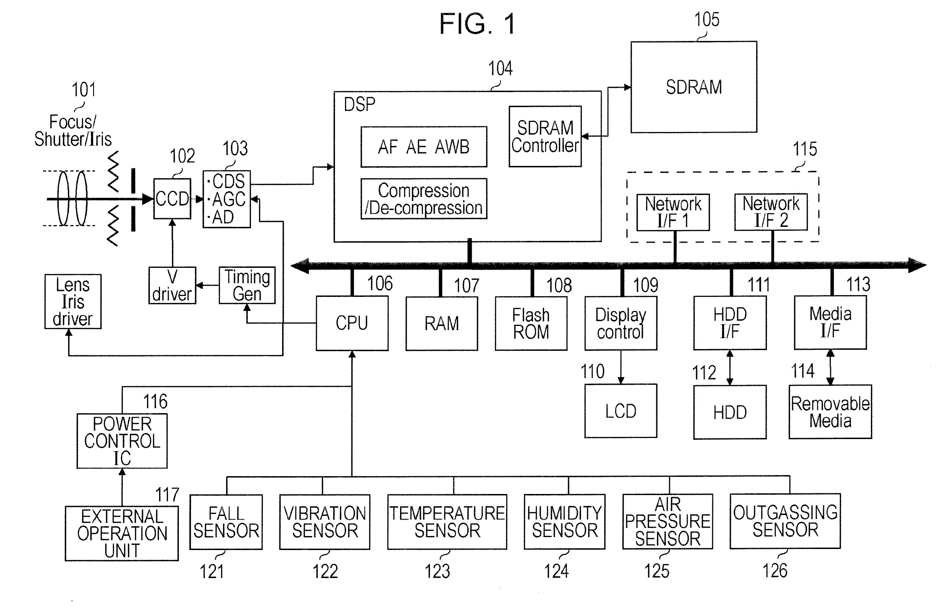

In Fig. 1, a block diagram for describing a structure of an image pick-up apparatus of the present invention is shown. As shown in Fig. 1, the image pick-up apparatus photoelectrically converts shooting data input via an optical lens unit 101 at a CCD 102, performs signal processing such as conversion to a digital signal at a signal conversion unit 103, and performs encoding processing such as data compression at a digital signal processing unit (DSP) 104, and processed data is temporarily accumulated in an SDRAM 105 utilized as a buffer. The data accumulated in the SDRAM 105 is recorded on a hard disk drive (HDD) 112 via an HDD interface 111 on the basis of control of a control unit (CPU) 106.

As shown in Fig. 1, the image pick-up apparatus includes a RAM 107, a ROM 108, a display controller 109, an LCD 110, the HDD interface 111, the hard disk drive (HDD) 112, a media interface 113, removable media 114 such as a flash memory, a network interface 115, a power control IC 116, and an external operation unit 117 in addition to the control unit (CPU) 106.

Moreover, as various sensors, a fall sensor 121 for detecting if an appliance has started falling, a vibration sensor 122 for detecting vibration of the appliance, a temperature sensor 123 for detecting an ambient temperature inside the appliance or of where the appliance is placed, a humidity sensor 124 for detecting a humidity inside the appliance or of where the appliance is placed, an air pressure sensor 125 for detecting an ambient air pressure inside the appliance or of where the appliance is placed, and an outgassing sensor 126 for detecting a gas harmful to the hard disk, for example, a siloxane or the like, are included.

The control unit (CPU) 106 executes processing in accordance with various processing programs stored in the ROM 108. The RAM 107 is mainly used as a work area for, for example, temporarily memorizing, for example, a parameter utilized in data processing and, for example, processed data. The external operation unit 119 includes, in addition to a power switch, for example, various operation keys or function keys such as a mode switching key for switching between operation modes such as a moving-images shooting mode, a still image shooting mode, and a VTR mode, a shutter key for shooting a still image, a shooting start key for shooting moving images, a recording key, a playback key, a stop key, a fast-forward key, a fast-reverse key, and the like, and receives an operation input from a user, and supplies, to the control unit (CPU) 106, an electric signal corresponding to the received operation input.

In response to the operation input from the user, the control unit (CPU) 106 reads, from the ROM 108, and executes a program for performing target processing, and performs control of processing which complies with an instruction from the user by controlling each unit.

Recording processing of the shooting data in the image pick-up apparatus of the present invention will be described. As described above, the shooting data input via the optical lens unit 101 is photoelectrically converted at the CCD 102, is converted into a digital signal at the signal conversion unit 103, is subjected to encoding processing such as data compression at the digital signal processing unit (DSP) 104, and is accumulated in the SDRAM 105 utilized as the buffer. The data accumulated in the SDRAM 105 is intermittently recorded on the hard disk drive (HDD) 112 via the HDD interface 111 on the basis of control of the control unit (CPU) 106.

In a case in which an ordinarily intermittent recording is performed, when a shooting operation is started by a recording start operation performed by the user, AV stream data encoded at the digital signal processing unit (DSP) 104 is accumulated in the SDRAM 105, and if the accumulated data in the SDRAM 105 exceeds a predetermined threshold, the accumulated data in the SDRAM 105 is collectively recorded on the hard disk drive (HDD) 112 on the basis of the control of the control unit (CPU) 106.

The control unit (CPU) 106 performs control so that the HDD 112 is caused to be in a suspended state during a period when only data accumulation in the SDRAM 105 as the buffer memory is executed and the HDD 112 is caused to be in an active state only during a period when the data accumulated in the SDRAM 105 is output to and recorded on the HDD 112. By executing this intermittent recording scheme, a drive time for the HDD 112, that is, an active-state setting time can be reduced, and it becomes possible to decrease power consumption.

When the control unit (CPU) 106 starts the processing in which the data accumulated in the SDRAM 105 is output to and recorded on the HDD 112, the control unit (CPU) 106 first sets the HDD 112 to be in the active state. After the HDD 112 has been made to be active, the data accumulated in the SDRAM 105 is output to the HDD 112. Here, even during an output job, the data encoded at the DSP 104 is sequentially accumulated in the SDRAM 105 as long as the shooting operation continues.

The control unit (CPU) 106 causes the HDD 112 to be in the suspended state when a process of recording data (the output job) on the HDD 112 is completed. When the amount of data accumulated in the SDRAM 105 exceeds the threshold again, the output job to the HDD 112 is performed. In this way, the reduction in power consumption is achieved by accumulating the data in the SDRAM 105, setting the HDD 112, during that time, to be in the suspended state, and setting the HDD 112 to be in the active state only during the period when the data is collectively recorded. Here, in general, a data recording rate to the HDD 112 is sufficiently faster than a shooting bit rate of an AV stream, and as the capacity of the SDRAM 105 becomes larger, a suspension time of the HDD 112 becomes longer and the effect of reduction in power consumption is increased.

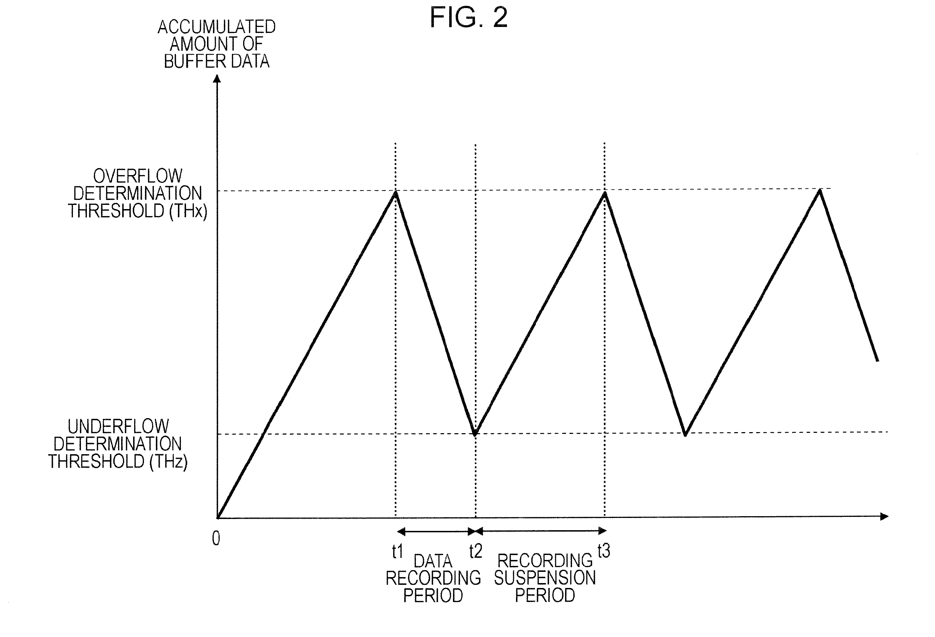

With reference to Fig. 2, the transition of the accumulated amount of data in the SDRAM 105 as the buffer and a timing at which the process of recording data on the hard disk drive (HDD) 112 is executed will be described. In the graph shown in Fig. 2, the horizontal axis represents time and the vertical axis represents the accumulated amount of buffer data in the SDRAM 105 as the buffer. For example, at time t = 0, if shooting is started by a user, user data (video data) is accumulated in the SDRAM 105 as the buffer, and the accumulated amount of buffer data is increased.

The control unit (CPU) 106 monitors the accumulated amount of data in the SDRAM 105 as the buffer, and when the accumulated amount reaches an overflow determination threshold at time T = t1, the process of recording the data stored in the SDRAM 105 as the buffer on the hard disk drive (HDD) 112 is started.

When the recording of data on the hard disk drive (HDD) 112 is started, the accumulated amount of data in the SDRAM 105 decreases, and the accumulated amount in the SDRAM 105 reaches an underflow determination threshold at time T = t2. When the accumulated amount in the SDRAM 105 reaches the underflow determination threshold, the process of recording the data on the hard disk drive (HDD) 112 is suspended. Moreover, during a recording suspension period, the video data is accumulated in the SDRAM 105 as the buffer and the accumulated amount of buffer data is increased.

When the accumulated amount of buffer data reaches the overflow determination threshold at time T = t3, the control unit (CPU) 106 starts the process of recording the data stored in the SDRAM 105 on the hard disk drive (HDD) 112. In this way, the process of recording the user data on the hard disk drive (HDD) 112 is intermittently executed.

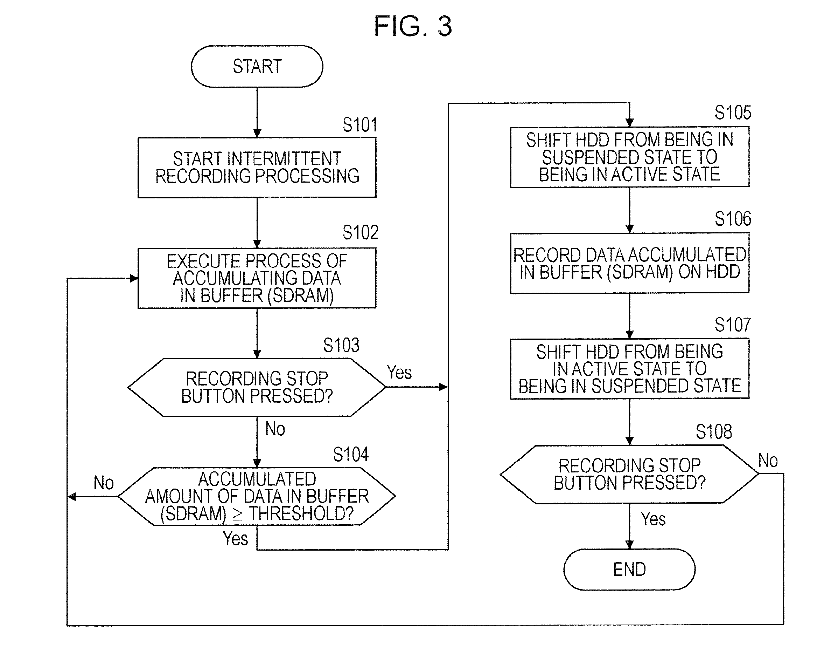

In this way, the recording of data on the hard disk drive (HDD) 112 is collectively executed when the data accumulated in the SDRAM 105 has reached a predetermined threshold. A general processing sequence of this intermittent recording processing will be described with reference to the flowchart of Fig. 3.

The control of this intermittent recording processing is executed under the control of the control unit (CPU) 106. First, if the intermittent recording processing is started on the basis of, for example, a user's operation using a recording-process start button in step S101, a process of accumulating data in the buffer (SDRAM) is executed in step S102.

In step S103, it is determined whether or not an operation input using a recording stop button has been performed. If an operation input using the recording stop button has been performed, the procedure proceeds to step S105. In step S103, if it is determined that an operation input using the recording stop button has not been performed, a process of determining the accumulated amount of data in the buffer (SDRAM) in step S104 is performed.

In step S104, the accumulated amount of data in the buffer (SDRAM) is checked and determined whether or not to be larger than or equal to a predetermined threshold. If the accumulated amount in the buffer (SDRAM) is not larger than or equal to the predetermined threshold, the process of accumulating data in the buffer (SDRAM) in step S102 is continuously executed.

In step S104, if it is determined that the accumulated amount in the buffer (SDRAM) has become larger than or equal to the predetermined threshold, or in step S103, if it is determined that an operation input using the recording stop button has been performed, the procedure proceeds to step S105.

In step S105, the hard disk drive (HDD) is shifted from being in the suspended state to being in the active state. That is, power supply to the HDD is executed, and the HDD is set to be in a state in which data recording is possible. Moreover, in step S106, a process of collectively recording, on the hard disk drive (HDD), the data accumulated in the buffer (SDRAM) is executed.

When the process of collectively recording the data on the hard disk drive (HDD) is completed in step S106, in step S107, the hard disk drive (HDD) is set from being in the active state to being in the suspended state. That is, the power supply to the hard disk drive (HDD) is stopped or reduced, and a process in which, for example, the head is fixed to a retraction position is performed.

Moreover, in step S108, it is determined whether or not an operation input using the recording stop button has been performed. If an operation input using the recording stop button has been performed, the process ends. In step S108, if it is determined that an operation input using the recording stop button has not been performed, the processes in and after step S102 are repeatedly executed.

It becomes possible to reduce the power consumption by performing such intermittent recording processing. However, as described above, in general, a hard disk drive (HDD) may lapse into an inoperable state because of various external environments as factors. A recording operation or a playback operation may be impossible because of an effect of, for example, shock, vibration, temperature, humidity, air pressure, or the like. In particular, hard disk drives (HDD) are sensitive to shock. For portable appliances which are often carried, if a user drops a portable appliance by mistake, it is anticipated that this may apply an impact to the HDD in an impactive way.

Thus, for HDD-mounted portable appliances, some appliances have a mechanism to protect the HDD by detecting falling using an acceleration sensor, and by retracting the head of the HDD before crashing onto the ground.

In a case in which intermittent recording is executed, the hard disk drive (HDD) repeats a process of changing alternately between being in the active state and being in the suspended state. When the hard disk drive (HDD) is in the suspended state, in general, the head of the HDD is often retracted. Thus, compared with a case in which the hard disk drive (HDD) is in the active state, even if the appliance has fallen in a case in which the hard disk drive (HDD) is in the suspended state, the probability of being able to resist the shock is high. That is, the probability of the HDD being damaged or of data being lost is lowered.

In the information processing apparatus such as an image pick-up apparatus of the present invention, when the recording of data on the hard disk drive (HDD) is executed as the intermittent recording processing, at a point in time when execution of changing from the suspended state to the active state is started, the environment in which the appliance is placed is determined by various sensors, and if it is determined that safe data recording is possible, shifting to the active state is performed and the data recording is performed.

On the basis of results determined by the various sensors, if the state is determined to be that in which the safe data recording cannot be performed, a process of maintaining the suspended state of the hard disk drive (HDD) without shifting to the active state is performed.

In this way, the hard disk drive (HDD) is protected and damage to the HDD and loss of data are prevented by determining whether or not the hard disk drive (HDD) may be started up, at the time of the intermittent recording, before changing the hard disk drive (HDD) from being in the suspended state to being in the active state.

Previously, as described with reference to the flowchart shown in Fig. 3, the process of shifting the hard disk drive (HDD) from being in the suspended state to being in the active state was unconditionally performed when it was detected that the accumulated data such as the AV stream data was accumulated to an amount more than or equal to a threshold in the SDRAM utilized as the buffer; however, in the information processing apparatus of the present invention, even if it has been detected that the accumulated data such as AV stream data is accumulated to an amount more than or equal to a threshold in the SDRAM utilized as the buffer, if the state is determined to be that in which safe data recording cannot be performed on the basis of the results determined by the various sensors, the process of maintaining the suspended state of the hard disk drive (HDD) without shifting to the active state is performed.

For example, when the fall sensor determines that the appliance is falling, the hard disk drive (HDD) remains in the suspended state without changing to the active state. Not only is it determined whether the appliance is falling, but also it is determined whether the hard disk drive (HDD) is operable by the various sensors for vibration, temperature, humidity, air pressure, outgas, and the like. After the determination, in the case that the start-up of the hard disk drive (HDD) is impossible, if there is a device capable of recording among the other devices, recording is performed on the device.

Moreover, data may be recorded on a different appliance via the network IF 115 shown in Fig. 1. If there are no such devices, waiting is performed until the hard disk drive (HDD) is changed to be in a start-up permitted state, and if the hard disk drive (HDD) has been changed to be in the start-up permitted state, the hard disk drive (HDD) is caused to be in the active state and the output process is performed. In a case in which a stream buffer overflows, a video being shot at the time cannot be recorded; however, if the hard disk drive (HDD) remains in the active state and recording is performed on the hard disk drive (HDD), there is a possibility of destroying the data which has been recorded so far on the hard disk drive (HDD), and furthermore there is also a possibility that the hard disk drive (HDD) is physically destroyed and even the start-up of the hard disk drive (HDD) becomes impossible.

In a structure of the present invention, in a structure in which the intermittent recording processing is performed, when the hard disk drive (HDD) is changed from being in the suspended state to being in the active state, it is determined whether or not the hard disk drive (HDD) is in a state in which data recording is safely possible on the basis of various pieces of sensor information. Only in the case of being in a state in which the data recording is safely possible, is shifting to the mode at the time of being active executed and data recording is performed. On the basis of results determined by the various sensors, if it is determined that the HDD is in a state in which safe data recording cannot be performed, the process of maintaining the suspended state of the hard disk drive (HDD) without shifting to the active state is performed.

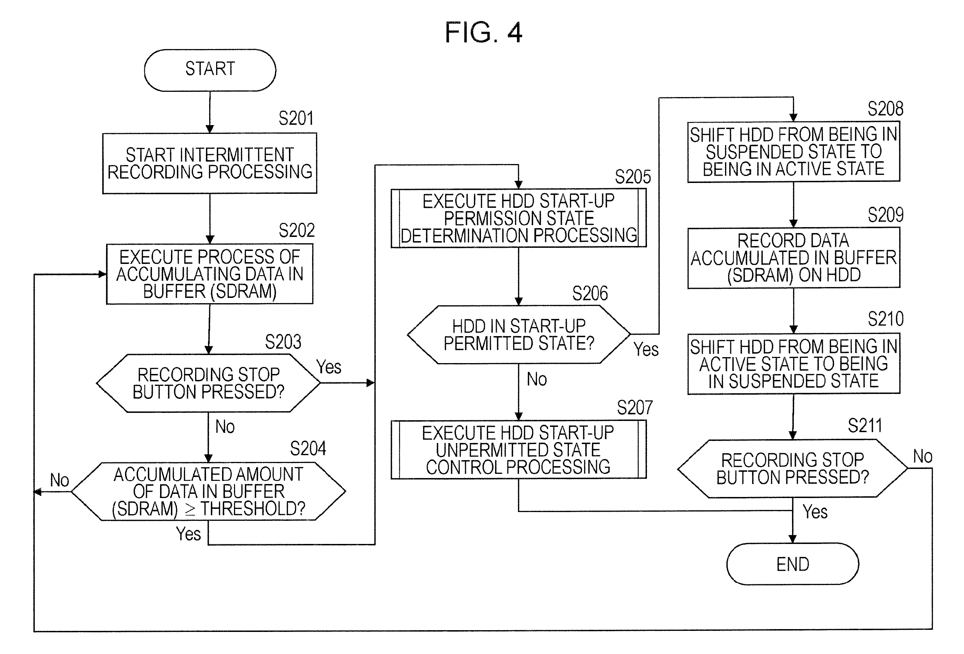

With reference to Fig. 4 through Fig. 6, a data recording processing sequence will be described which is executed in the information processing apparatus (the image pick-up apparatus) of the present invention. The flowchart shown in Fig. 4 shows the entire sequence of the data recording processing executed in the information processing apparatus (the image pick-up apparatus) of the present invention, that is, the intermittent recording processing in which the data accumulated in the buffer is collectively recorded on the hard disk drive (HDD) 112 in a case in which the SDRAM 105 shown in Fig. 1 is used as the buffer and the data accumulated in the buffer has reached the amount of a predetermined threshold. The control of this intermittent recording processing is executed under the control of the control unit (CPU) 106.

First, in step S201, if the intermittent recording processing is started on the basis of, for example, a user's operation using the recording-process start button, a process of accumulating data in the buffer (SDRAM) is executed in step S202.

In step S203, it is determined whether or not an operation input using the recording stop button has been performed. If the operation input using the recording stop button has been performed, the procedure proceeds to step S205. In step S203, if it is determined that the operation input using the recording stop button has not been performed, a process of determining the accumulated amount of data in the buffer (SDRAM) in step S204 is performed.

In step S204, the accumulated amount of data in the buffer (SDRAM) is checked and determined whether or not to be larger than or equal to a predetermined threshold. If the accumulated amount in the buffer (SDRAM) is not larger than or equal to the predetermined threshold, the process of accumulating data in the buffer (SDRAM) in step S202 is continuously executed.

In step S204, if it is determined that the accumulated amount in the buffer (SDRAM) is larger than or equal to the predetermined threshold, or in step S203, if it is determined that an operation input using the recording stop button has been performed, the procedure proceeds to step S205.

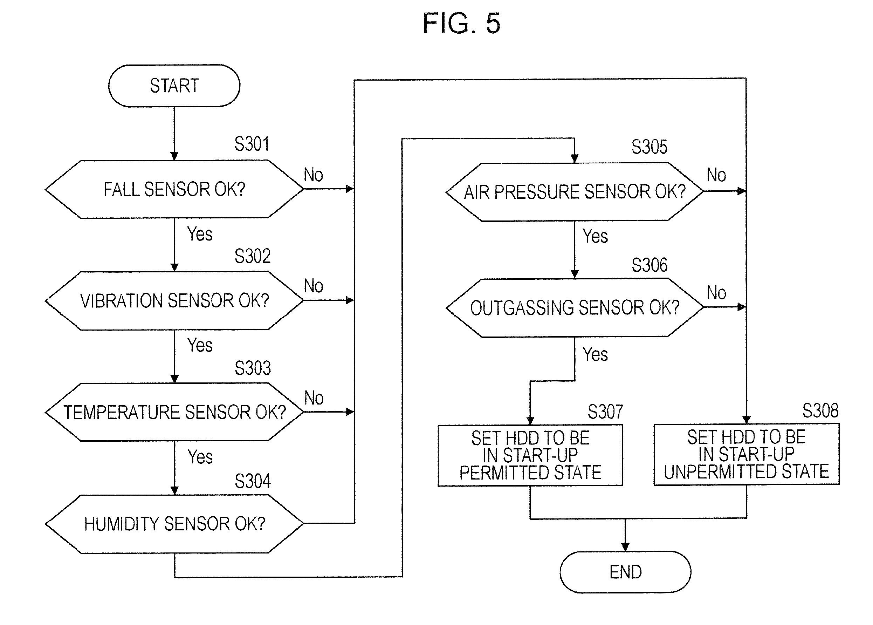

In step S205, hard disk drive (HDD) start-up permission state determination processing is executed. That is, processing in which it is determined whether or not recording data on the hard disk drive (HDD) is safely executable is executed on the basis of various sensor inputs provided in the information processing apparatus. A specific sequence of the hard disk drive (HDD) start-up permission state determination processing in this step S205 will be described with reference to the flowchart shown in Fig. 5.

The CPU 106 as the control unit shown in Fig. 1 successively inputs pieces of detected information from the various sensors shown in Fig. 1, that is, the fall sensor 121 for detecting if an appliance has started falling, the vibration sensor 122 for detecting vibration of the appliance, the temperature sensor 123 for detecting an ambient temperature of where the appliance is placed, the humidity sensor 124 for detecting a humidity of where the appliance is placed, the air pressure sensor 125 for detecting an air pressure of the environment where the appliance is placed, and the outgassing sensor 126 for detecting a gas harmful to the hard disk, for example, a siloxane or the like, and executes the hard disk drive (HDD) start-up permission state determination processing on the basis of these pieces of sensor input information.

The determination processes in steps S301 through S306 shown in Fig. 5 are processes in which it is determined whether or not recording data on the hard disk drive (HDD) is safely executable, that is, whether or not the hard disk drive (HDD) may be shifted from being in the mode at the time of being suspended to being in the active state on the basis of input information from each of these various sensors. In a determination process based on the input information from the fall sensor 121 in step S301, if sensor input information indicating that the appliance is falling has been detected, the procedure proceeds to step S308, and the hard disk drive (HDD) is prohibited from being changed to the active state, and is set to be in an HDD start-up unpermitted state in which the suspended state is maintained.

In step S301, if sensor input information indicating that the appliance is not falling has been detected on the basis of the input information from the fall sensor 121, the procedure proceeds to step S302, and a determination process based on input information from the vibration sensor 122 is executed. If it is determined that the vibration of the appliance is greater than or equal to a predetermined allowed value on the basis of the input information from the vibration sensor 122, the procedure proceeds to step S308, and the hard disk drive (HDD) is prohibited from being changed to the active state and is set to be in the HDD start-up unpermitted state in which the suspended state is maintained.

In step S302, if it is determined that the vibration of the appliance is less than the predetermined allowed value on the basis of the input information from the vibration sensor 122, the procedure proceeds to step S303, and a determination process based on input information from the temperature sensor 123 is executed. On the basis of the input information from the temperature sensor 123, if it is determined that the temperature of the appliance or of the environment in which the appliance is placed is higher than or equal to the a predetermined allowed value, the procedure proceeds to step S308, and the hard disk drive (HDD) is prohibited from being changed to the active state and is set to be in the HDD start-up unpermitted state in which the suspended state is maintained.

In step S303, if it is determined that the temperature of the appliance or of the environment in which the appliance is placed is lower than the predetermined allowed value on the basis of the input information from the temperature sensor 123, the procedure proceeds to step S304, and a determination process based on input information from the humidity sensor 124 is executed. On the basis of the input information from the humidity sensor 124, if it is determined that the humidity of the appliance or of the environment in which the appliance is placed is higher than or equal to the a predetermined allowed value, the procedure proceeds to step S308, and the hard disk drive (HDD) is prohibited from being changed to the active state and is set to be in the HDD start-up unpermitted state in which the suspended state is maintained.

In step S304, if it is determined that the humidity of the appliance or of the environment in which the appliance is placed is lower than the predetermined allowed value on the basis of the input information from the humidity sensor 124, the procedure proceeds to step S305, and a determination process based on input information from the air pressure sensor 125 is executed. On the basis of the input information from the air pressure sensor 125, if it is determined that the air pressure of the environment in which the appliance is placed is higher than or equal to a predetermined allowed value, the procedure proceeds to step S308, and the hard disk drive (HDD) is prohibited from being changed to the active state and is set to be in the HDD start-up unpermitted state in which the suspended state is maintained.

In step S305, if it is determined that the air pressure of the environment in which the appliance is placed is lower than the predetermined allowed value on the basis of the input information from the air pressure sensor 125, the procedure proceeds to step S306, and a determination process based on input information from the outgassing sensor 126 is executed. On the basis of the input information from the outgassing sensor 126, if it is determined that an outgas harmful to the hard disk, for example, a siloxane or the like has been detected from the environment in which the appliance is placed, the procedure proceeds to step S308, and the hard disk drive (HDD) is prohibited from being changed to the active state and is set to be in the HDD start-up unpermitted state in which the suspended state is maintained.

In step S306, if it is determined, on the basis of input information from the outgassing sensor 126, that an outgas harmful to the hard disk has not been detected, the harmful outgas being, for example, a siloxane or the like, from the environment in which the appliance is placed, the procedure proceeds to step S307, and the HDD is set to be in an HDD start-up permitted state in which the hard disk drive (HDD) is allowed to be changed from being in the suspended state to being in the active state.

These processes are executed as the hard disk drive (HDD) start-up permission state determination processing in step S205 shown in Fig. 4. That is, on the basis of the various sensors inputs provided in the information processing apparatus, the hard disk drive (HDD) is set to be in the start-up permitted state or in the start-up unpermitted state by the process in which it is determined whether or not recording data on the hard disk drive (HDD) is safely executable.

Next, in step S206 in the flowchart shown in Fig. 4, a hard disk drive (HDD) set state determination process, that is, it is determined whether or not the hard disk drive (HDD) is in the start-up permitted state. If it has been determined that safe data recording is possible on the basis of the pieces of input information from the various sensors, the hard disk drive (HDD) has been set to be in the start-up permitted state, and the procedure proceeds to step S208 in this case. On the other hand, if it has been determined that safe data recording is impossible on the basis of a piece of input information from a sensor, the hard disk drive (HDD) has been set to be in the start-up unpermitted state and the procedure proceeds to step S207 in this case.

First, a process in a case in which it has been determined that the safe data recording is possible on the basis of the pieces of input information from the various sensors, that is, a process in a case in which the hard disk drive (HDD) has been set to be in the start-up permitted state will be described. In this case, in processes in and after step S208, the recording of data on the hard dis (HDD) will be executed.

First, in step S208, the hard disk drive (HDD) is shifted from being in the suspended state to being in the active state. That is, the hard disk drive (HDD) is set to be in a state in which data recording is possible by supplying power to the HDD, issuing a command to the HDD, or the like. Moreover, in step S209, a process in which the data accumulated in the buffer (SDRAM) is collectively recorded on the hard disk drive (HDD) is executed.

The process of collectively recording the data on the hard disk drive (HDD) is completed in step S209, and then in step S210, the hard disk drive (HDD) is set from being in the active state to being in the suspended state. That is, the power supply to the hard disk drive (HDD) is stopped or reduced, and a process in which, for example, the head is fixed to the retraction position is performed.

Moreover, in step S211, it is determined whether or not an operation input using the recording stop button has been performed. If an operation input using the recording stop button has been performed, the process ends. In step S211, if it is determined that an operation input using the recording stop button has not been performed, the processes in and after step S202 are repeatedly executed.

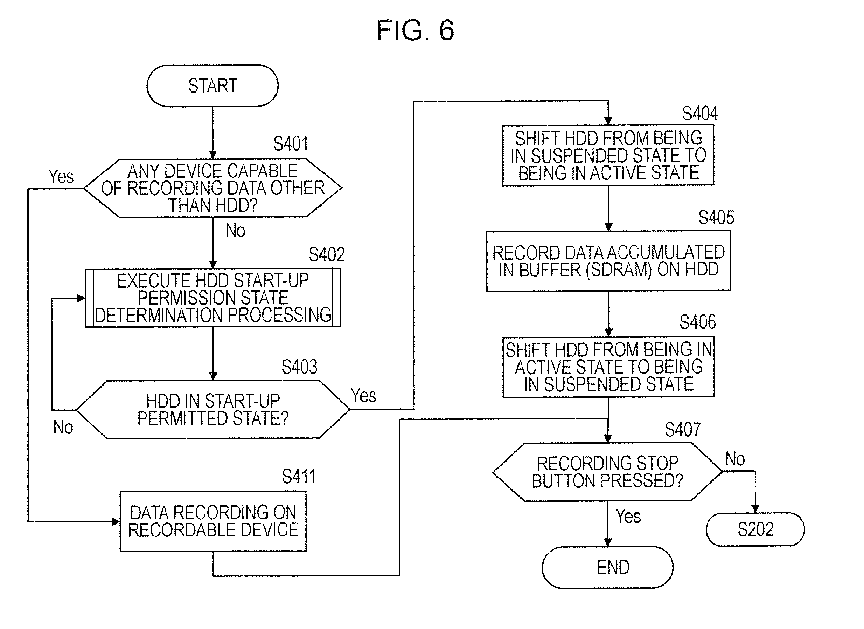

Next, in the hard disk drive (HDD) set state determination process in step S206, that is, in the determination process in which it is determined whether or not the hard disk drive (HDD) is in the start-up permitted state, a detailed sequence in processing step S207 in a case in which it has been determined that the safe data recording is impossible on the basis of input information from a sensor and the hard disk drive (HDD) has been set to be in the start-up unpermitted state will be described with reference to the flowchart shown in Fig. 6.

First, in step S401, it is determined whether or not the apparatus can utilize a device capable of recording data other than the hard disk drive (HDD). For example, it is determined whether or not the removable media 114 connected to the media interface 113 shown in Fig. 1, an external data recording device connected via the network interface 115, or the like is utilizable.

In step S401, if it is determined that the apparatus can utilize the device capable of recording data other than the hard disk drive (HDD), the procedure proceeds to step S411, and a process in which the accumulated data is output from the SDRAM 105 as the buffer and is recorded on the device which has been determined utilizable is executed.

In step S401, if it is determined that the apparatus cannot utilize the device capable of recording data other than the hard disk drive (HDD), the procedure proceeds to step S402, and the HDD start-up permission state determination processing is executed again. This processing is the processing which has been previously described with reference to Fig. 5, and is the processing in which it is determined whether or not recording data on the HDD is safely executable on the basis of the input information with respect to the various sensors. As time passes, if the environment has changed, the HDD may have been changed to being in the HDD start-up permitted state.

In step S403, if it is determined that the HDD is not in the HDD start-up permitted state, the HDD start-up permission state determination processing in step S402 is repeatedly executed. On condition that it has been determined that the HDD is in the HDD start-up permitted state in step S403, the procedure proceeds to step S404. In this case, in processes in and after step S404, the recording of data on the hard disk drive (HDD) will be executed.

First, in step S404, the hard disk drive (HDD) is shifted from being in the suspended state to being in the active state. That is, the hard disk drive (HDD) is set to be in the state in which data recording is possible by supplying power to the HDD, issuing a command to the HDD, or the like. Moreover, in step S405, the process in which the data accumulated in the buffer (SDRAM) is collectively recorded on the hard disk drive (HDD) is executed.

When the process of collectively recording the data on the hard disk drive (HDD) is completed in step S405, in step S406, the hard disk drive (HDD) is set from being in the active state to being in the suspended state. That is, the power supply to the hard disk drive (HDD) is stopped or reduced, and the process in which, for example, the head is fixed to the retraction position is performed.

Moreover, in step S407, it is determined whether or not the operation input using the recording stop button has been performed. If an operation input using the recording stop button has been performed, the process ends. In step S407, if it is determined that an operation input using the recording stop button has not been performed, the processes in and after step S202 in Fig. 4 are repeatedly executed.

In the information processing apparatus of the present invention, it becomes possible to reduce power consumption by performing the above described intermittent recording processing. Furthermore, the information processing apparatus of the present invention is designed to have a structure in which the various pieces of ambient information are input via the various sensors, it is determined whether or not recording data on the HDD is safely executable on the basis of the sensor detection information, the HDD is set to be in the start-up permitted state or in the start-up unpermitted state on the basis of the determination result, and the HDD is shifted from being in the suspended state to being in the active state and data recording is executed only in a case in which the HDD is in the start-up permitted state. Thus, the hard disk is prohibited from being shifted to the active state in a state in which there is a problem with the environment, for example, in the case of falling or the case of high temperature or high humidity, and it becomes possible to prevent the occurrence of damage to the HDD, loss of recording data, and the like.

Here, in the above-described embodiments, an exemplary processing in a case in which recording data on the hard disk is performed has been described; however, it is possible to perform similar control even in a case in which data playback from the hard disk is executed. That is, the structure is designed so that when data playback is started, as a condition for shifting the hard disk from being in the suspended state to being in the active state, it is determined whether or not reading data from the hard disk is safely executable on the basis of pieces of the input information from the various sensors, and the hard disk is set to be in the HDD start-up permitted state and shifted from being in the suspended state to being in the active state only in a case in which it has been determined that reading data from the hard disk is safely executable.

If it is determined that reading data from the hard disk cannot be safely executed on the basis of the input information from the various sensors, the hard disk is set to be in the HDD start-up unpermitted state and is set so that the hard disk is prohibited from being shifted from being in the suspended state to being in the active state, and data playback is stopped. By effectuating such playback control, safe data reading is achieved, and it becomes possible to prevent damage to the HDD and loss of recorded data.

The present invention has been described in detail above with reference to a specific embodiment. However, it is obvious that those skilled in the art can realize modifications and alterations of the embodiments within the scope of the present invention. That is, the present invention has been disclosed in the form of examples, and should not be construed as being limited thereto. In order to determine the gist of the present invention, the claims should be considered.

Moreover, the series of processes described in the specification may be executed by hardware, software, or the combined configuration of them. In a case in which processing is to be performed by software, a program in which a processing sequence is recorded can be installed into a memory inside a computer incorporated into dedicated hardware, whereby the program is executed, or a program can be installed into a general-purpose computer capable of executing various processes, whereby the program is executed.

For example, a program can be recorded in advance in a hard disk or a ROM (Read Only Memory) as a recording medium. Alternatively, a program can be temporarily or permanently stored (recorded) in a removable recording medium, such as a flexible disk, a CD-ROM (Compact Disc Read Only Memory), an MO (Magneto optical) disk, a DVD (Digital Versatile Disc), a magnetic disk, or a semiconductor memory. Such a removable recording medium can be provided as so-called packaged software.

Here, in addition to being installed into a computer from the removable recording medium such as that described above, programs may be transferred in a wireless manner from a download site or may be transferred by wire to a computer via a network, such as a LAN (Local Area Network) or the Internet, and it is possible for the computer to receive the programs which are transferred in such a manner and to install the programs into a recording medium such as an internal hard disk.

Here, various processes described in the specification may be executed not only in a time series according to the descriptions, but also may be executed in parallel or individually according to the processing performance of the apparatus which performs a process or as necessary. Furthermore, the system in the specification is a logical assembly configuration of a plurality of apparatuses. It is not limited to that each of the apparatuses in the configuration is disposed in the same housing.

### Industrial Applicability

As described above, according to a structure of one embodiment of the present invention, the structure is designed so that it is determined, on the basis of detection information of at least one of these sensors, for example, a fall sensor, a vibration sensor, a temperature sensor, a humidity sensor, an air pressure sensor, and an outgassing sensor, whether or not data recording or a playback process utilizing the hard disk can be safely executed, and the hard disk is caused to be shifted from being in the suspended state to being in the active state, in which data recording or a playback process is executable, on condition that it has been determined that the safe data recording or playback is possible. Thus, the hard disk is prohibited from being shifted to the active state in a state in which there is a problem with the environment, for example, in the case of falling, the case of high temperature or high humidity, or the like, and damage to the HDD and loss of recorded data can be presented.

## Claims

1. An information processing apparatus which executes data recording or a playback process, **characterized by** comprising:
a hard disk as a data recording medium;
a control unit for executing intermittent data recording or data playback control utilizing the hard disk; and
a sensor for detecting ambient information of the information processing apparatus,
wherein the control unit is configured to
determine, on the basis of input information from the sensor, whether or not the data recording or the playback process utilizing the hard disk is possible, and to execute a process of causing the hard disk to be shifted from being in a suspended state to being in an active state in which the data recording or the playback process is executable on condition that it has been determined that the data recording or the playback is possible.

2. The information processing apparatus according to Claim 1, **characterized in that:** the control unit
is configured to accumulate data to be recorded on the hard disk in a buffer, and to execute control of recording, on the hard disk, the data accumulated in the buffer in a case in which the amount of data accumulated in the buffer is more than or equal to a predetermined threshold,
sets the hard disk to be in the suspended state during a period in which only a buffer accumulation process is executed, and
determines whether or not the data recording utilizing the hard disk is possible in a case in which the data accumulated in the buffer is recorded on the hard disk, and executes a process of causing the hard disk to be shifted from being in the suspended state to being in the active state on condition that it has been determined that the data recording is possible.

3. The information processing apparatus according to Claim 1, **characterized in that:** the control unit
executes a process of prohibiting a process of shifting the hard disk from being in the suspended state to being in the active state in a case in which, on the basis of detection information of the sensor, it has been determined that the data recording or the playback process utilizing the hard disk cannot be executed.

4. The information processing apparatus according to Claim 1, **characterized in that:** the control unit
in a case in which, on the basis of detection information of the sensor, it has been determined that the data recording utilizing the hard disk cannot be executed,
executes a process of detecting a device capable of recording data other than the hard disk, and executes recording data in the detected device.

5. The information processing apparatus according to Claim 1, **characterized in that:** the control unit
is configured to repeatedly execute a determination process based on detection information of the sensor in a case in which, on the basis of detection information of the sensor, it has been determined that the data recording utilizing the hard disk cannot be executed.

6. The information processing apparatus according to Claim 1, **characterized in that:** the control unit
executes a process of prohibiting the hard disk from being shifted from being in the suspended state to being in the active state in a case in which, on the basis of detection information of at least one of these sensors, a fall sensor, a vibration sensor, a temperature sensor, a humidity sensor, an air pressure sensor, and an outgassing sensor, it has been determined that the data recording or the playback process utilizing the hard disk cannot be executed.

7. An image pick-up apparatus, **characterized by** comprising:
an image pick-up unit;
a buffer for temporarily memorizing data input via the image pick-up unit;
a hard disk for intermittently and collectively recording data accumulated in the buffer;
a control unit for executing control of intermittent data recording utilizing the hard disk; and
a sensor for detecting ambient information of the image pick-up apparatus,
wherein the control unit is configured to
determine, on the basis of input information from the sensor, whether or not the data recording utilizing the hard disk is executable, and cause the hard disk to be shifted from being in a suspended state to being in an active state, in which the data recording is executable, on condition that it has been determined that the data recording is executable, and execute a process of recording, on the hard disk, the data accumulated in the buffer.

8. An information processing method for executing data recording or a playback process in an information processing apparatus, **characterized by** comprising:
an environment determination step of determining whether or not data recording or a playback process utilizing a hard disk is executable on the basis of input information from a sensor for detecting ambient information of the information processing apparatus;
a state changing step of executing a process of causing the hard disk to be shifted from being in a suspended state to being in an active state, in which the data recording or the playback process is executable, on condition that, in the environment determination step, it has been determined that the data recording or the playback is possible; and
a data recording and playback step of executing the data recording or the playback process utilizing the hard disk which has been shifted to being in the active state in the state changing step.

9. The information processing method according to Claim 8, **characterized by** further comprising:
a buffer accumulation step of accumulating, in the buffer, data to be recorded on the hard disk; and
an amount-of-data-accumulated-in-buffer determination step of determining whether or not the amount of data accumulated in the buffer is more than or equal to a predetermined threshold,
wherein an environment determination process in the environment determination step is executed in a case in which the amount of data accumulated in the buffer in the amount-of-data-accumulated-in-buffer determination step is more than or equal to the predetermined threshold.

10. The information processing method according to Claim 8, **characterized by** further comprising:
a step of executing a process of prohibiting a process of shifting the hard disk from being in the suspended state to being in the active state in a case in which, on the basis of detection information of the sensor, it has been determined that the data recording or the playback process utilizing the hard disk cannot be executed.

11. The information processing method according to Claim 8, **characterized by** further comprising:
in a case in which, on the basis of detection information of the sensor, it has been determined that the data recording utilizing the hard disk cannot be executed,
a step of executing a process of detecting a device capable of recording data other than the hard disk, and executing recording data in the detected device.

12. The information processing method according to Claim 8, **characterized by** further comprising:
a step of repeatedly executing a determination process based on detection information of the sensor in a case in which, on the basis of detection information of the sensor, it has been determined that the data recording utilizing the hard disk cannot be executed.

13. The information processing method according to Claim 8, **characterized in that**: the environment determination step
is a step of determining, on the basis of detection information of at least one of these sensors, a fall sensor, a vibration sensor, a temperature sensor, a humidity sensor, an air pressure sensor, and an outgassing sensor, whether or not the data recording or the playback process utilizing the hard disk can be executed.

14. A computer program causing data recording or a playback process to be executed in an information processing apparatus, **characterized by** causing execution of,
in a control unit, an environment determination step of causing determination of whether or not data recording or a playback process utilizing a hard disk is executable on the basis of input information from a sensor for detecting ambient information of the information processing apparatus;
in the control unit, a state changing step of causing a process of causing the hard disk to be shifted from being in a suspended state to being in an active state, in which the data recording or the playback process is executable to be executed on condition that it has been determined that the data recording or the playback is possible; and
in the control unit, a data recording and playback step of causing execution of the data recording or the playback process utilizing the hard disk which has been shifted to being in the active state.
